# EUROPÄISCHE PATENTSCHRIFT

(11) **EP 2 801 456 B1**
(45) Veröffentlichungstag und Bekanntmachung des Hinweises auf die Patenterteilung: **29.06.2016**
(21) Anmeldenummer: 14001148.7
(22) Anmeldetag: 28.03.2014
(51) Int. Cl.: B27D 1/00, B27D 5/00, B32B 21/02, B32B 21/04, B32B 21/13, B32B 21/14, B32B 3/30, B44C 5/04

(54) **Verfahren der Oberflächenstrukturierung**
Surface structuring method
Procédé de structuration de surface

(30) Priorität: 06.05.2013 DE 102013007655
(43) Veröffentlichungstag der Anmeldung: 12.11.2014
(73) Patentinhaber: VD Werkstätten GmbH & Co. KG, 32107 Bad Salzuflen (DE)
(72) Erfinder: Vietmeyer, Thomas, 32105 Bad Salzuflen (DE)
(74) Vertreter: Specht, Peter

(56) Entgegenhaltungen:
- EP-A1- 2 535 155
- EP-A2- 2 644 338
- WO-A2-2006/087155
- WO-A2-2013/050910
- DE-U1-202004 014 293
- DE-U1-202013 011 776
- US-A- 2 720 478

## Beschreibung

Die Erfindung betrifft ein Verfahren der Oberflächenstrukturierung bei Paneelen, Möbelbauplatten oder dergleichen durch Pressen gemäß dem Oberbegriff des Anspruchs 1. Ein solches Verfahren ist aus der WO 2013/050910 A bekannt.

Die Verfahren von Oberflächenstrukturierungen bei Paneelen, Möbelbauplatten oder dergleichen sind in vielfältigen Ausführungsformen bekannt.

Bei einer Vielzahl dieser bekannten Verfahren erfolgt lediglich eine Oberflächenveredelung durch Schleifen, Lackieren, Kaschieren oder dergleichen mehr. Daneben sind Verfahren bekannt, durch die Oberfläche eines Paneels oder dergleichen eine räumliche Struktur erhält. So können Oberflächen gebürstet werden, bekannt beispielsweise aus der WO2004/035263A2, um einen Effekt einer Maserung wie bei einem Echtholz auch bei Holzersatzwerkstoffen deutlicher hervortreten zu lassen.

Aus der WO 2006/087155 A2 ist es bekannt, Risse oder Löcher in einer Holzbeschichtung durch ein Ausfüllen der Risse oder Löcher mit einer Füllmasse zu füllen, wodurch ein *"vollkommen neues Bild"* entstehen soll, das mit einem Echtholzeindruck nichts gemeinsam hat..

Die WO 2013/050910 A1 lehrt ein Beschichten eine Platte mit bedrucktem Papier, das beim Pressen aufreißen kann oder das vor dem Pressen mit Ausschnitten versehen worden sein kann.

Bekannt ist ferner das Prägen von Laminaten zwischen zwei Kalanderwalzen, um diesen Laminaten eine gewisses räumliches Muster zu geben.

Bei den bekannten Verfahren der Oberflächenstrukturierung können Oberflächenrauhigkeiten von etwa 1 mm erreicht werden, durch die ein Paneel bei einem Prägen zwischen Kalanderwalzen ein regelmäßig sich wiederholendes, strukturiertes Muster erhält. Diese Verfahren sind jedoch nicht geeignet, zum einen die Natürlichkeit einer rauen Borke oder einer vergleichbaren, natürlichen Struktur wie einem Altholz wiederzugeben und zum anderen durch die Strukturierung farbige Akzente zu setzen.

Vor diesem technischen Hintergrund macht die Erfindung es sich zur Aufgabe, ein Verfahren der Oberflächenstrukturierung zur Verfügung zu stellen, mit dem bei Paneelen, Möbelbauplatten oder dergleichen die Wiedergabe derartig ausgeprägter, sehr rauer und insbesondere natürlicher Strukturen unter Einbeziehung farbiger Akzente ermöglich ist.

Gelöst wird diese technische Problematik durch die Merkmale des Anspruchs 1.

Das Verfahren nach der Erfindung bietet eine Reihe von Vorteilen.

Sind das Furnier und die durchgefärbte Platte farblich aufeinander abgestimmt, so werden die Ausnehmungen kaum auffallen. Dies umso mehr, wenn weiter vorgesehen ist, dass mit dem Verpressen das Furnier eine Struktur erhält.

Verpresst werden das Furnier und die Platte dann vorzugsweise auf einem Presstisch unter einem strukturierten Pressstempel. Hierdurch wird sichergestellt, dass die Rückseite des verpressten, fertigen Paneels eben ausgebildet ist, während eine Sichtseite in erheblichem Maß strukturiert wird. Zur Anwendung kommt vorzugsweise eine Hydraulikpresse, die den für eine Verformung nötigen Pressendruck im Vergleich zu Kalanderwalzen problemlos aufbringen kann:

Für hochwertige Oberflächen der in Rede stehenden Paneele, Möbelbauplatten oder dergleichen ist weiter vorgesehen, dass das Furnier ein Echtholzfurnier ist.

Neben einem Echtholzfurnier können auch rekonstruierte, vielfach laminierte Echtholz-Messerfurniere Verwendung finden.

Dagegen ist die Platte vorzugsweise eine kostengünstige mitteldichte Faserplatte, die dann durch das Furnier ihrer hochwertige Optik erhält.

Alternativ zu farbig aufeinander abgestimmten Furnieren und Platten kann die Platte auch eine Kontrastfarbe aufweisen, womit unterschiedliche gestalterische Effekte erreicht werden können.

Eine bevorzugte Farbe der Platte ist schwarz. In Verbindung mit Furnieren, die in einem hohen Maß Graufärbungen aufweisen, entsteht insbesondere mit Ausnehmungen in Form von Rissen oder unregelmäßig berandeten Löchern ein Altholzeindruck, der durch eine vorgesehene Strukturierung noch erhöht werden kann.

Die Erfindung wird anhand der Zeichnung näher erläutert, in der lediglich ein Ausführungsbeispiel schematisch und nicht maßstabsgerecht dargestellt ist. In der Zeichnung zeigt:
- Fig. 1: in einer Draufsicht einen Ausschnitt eines erfindungsgemäßen Paneels und
- Fig. 2: einen in der Höhe deutlich überhöhten Schnitt gemäß der Linie II, II in Fig. 1

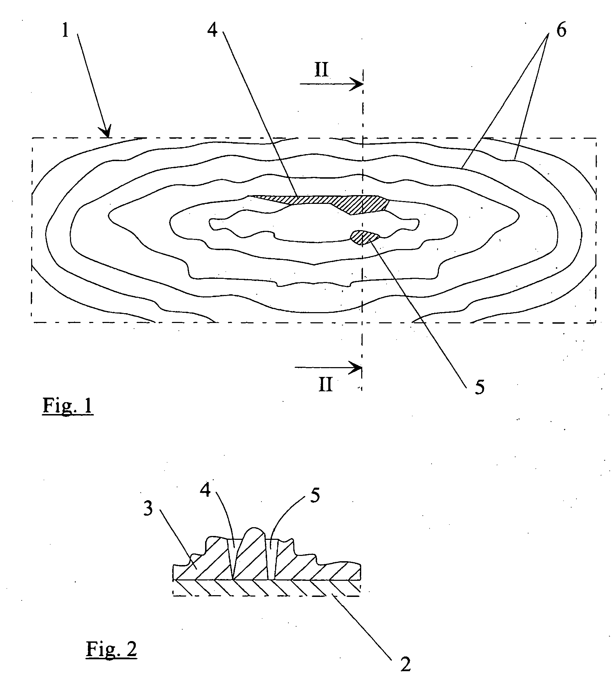

Die in einer Draufsicht gemäß Fig. 1 wiedergegebene Möbelbauplatte 1 , Paneel oder dergleichen weist eine durchgefärbte Platte 2 aus einem Holzersatzwerkstoff auf, vorzugsweise eine schwarz durchgefärbte, mitteldichte Faserplatte.

Die durchgefärbte Platte 2 ist mit einem Furnier 3 verpresst, das durch das Verpressen eine Struktur erhalten hat, die in der Fig. 2 deutlich überhöht dargestellt ist.

Das Furnier 3 ist mit Ausnehmungen versehen, hier in Form von idealisiert dargestellten Rissen 4 und unregelmäßig berandeten Löchern 5.

Durch die Risse 4 bzw. durch die Löcher 5 ist die Farbe der durchgefärbten Platte 2 in der Draufsicht sichtbar, was bei einer farbigen Abstimmung des Furniers und der Farbe der durchgefärbten Platte 2 Risse 4 und Löcher 5 optisch verschwinden lässt.

Alternativ können durch unterschiedliche Farbgestaltungen verschiedenste Effekte auch hervorgerufen werden. Insbesondere ist daran gedacht, dass bei einer schwarz durchgefärbten Platte 2 ein viele Grautöne aufweisendes Furnier 3 verwendet wird, so dass, insbesondere mit der starken Strukturierung, der Eindruck von Altholz mit einer starken Maserung 6 erhalten wird.

## Patentansprüche

1. Verfahren der Oberflächenstrukturierung bei Paneelen, Möbelbauplatten oder dergleichen durch Pressen, **dadurch gekennzeichnet, dass** ein mit Ausnehmungen versehenes Furnier (3) mit einer durchgefärbten Platte (2) aus einem Holzersatzwerkstoff verpresst wird, wobei die Ausnehmungen durch Risse (4) oder unregelmäßig berandete Löcher (5) ausgebildet werden und das Furnier ein Echtholzfurnier ist oder ein rekonstruiertes, vielfach laminiertes Echtholz-Messerfurnier ist.

2. Verfahren nach Anspruch 1, **dadurch gekennzeichnet, dass** die Platte (2) eine mitteldichte Faserplatte ist.

3. Verfahren nach einem oder mehreren der vorangehenden Ansprüche, **dadurch gekennzeichnet, dass** die Platte (2) schwarz durchgefärbt ist.

## Claims

1. A method for surface structuring in panels, furniture-boards or the like by pressing, **characterized in that** a veneer (3) provided with recesses is pressed with a board (2) which is dyed through and is made of a wood substitute material, wherein the recesses are formed by cracks (4) or holes (5) with irregular edges, and the veneer is real wood veneer or a reconstructed, multiply laminated real wood sliced veneer.

2. A method according to claim 1, **characterized in that** the board (2) is a fibreboard of medium density.

3. A method according to one or several of the preceding claims, **characterized in that** the board (2) is dyed through in black.

## Revendications

1. Procédé pour la structuration de la surface de plaques, de panneaux pour la construction de meubles ou similaires par pressage, **caractérisé en ce qu'**un placage (3) présentant des solutions de continuité est pressé avec un panneau (2) teinté dans la masse fait d'un matériau à base de bois, les solutions de continuité étant formées par des fissures (4) ou des trous (5) à bords irréguliers et le placage étant un placage en bois naturel ou un placage tranché en bois naturel reconstitué stratifié en plusieurs couches.

2. Procédé selon la revendication 1, **caractérisé en ce que** le panneau (2) est un panneau de fibres de densité moyenne.

3. Procédé selon l'une des revendications précédentes, **caractérisé en ce que** le panneau (2) est teinté en noir dans la masse.
